# FASCICULE DE BREVET EUROPEEN

(11) **EP 1 127 254 B1**
(45) Date de publication et mention de la délivrance du brevet: **02.06.2010**
(21) Numéro de dépôt: 99971507.1
(22) Date de dépôt: 03.11.1999
(51) Int. Cl.: G01L 1/20, B60N 2/00

(54) **DETECTEUR DE PASSAGER**
FAHRGASTDETECTOR
PASSENGER DETECTOR

(30) Priorité: 04.11.1998 LU 90309
(43) Date de publication de la demande: 29.08.2001
(73) Titulaire: IEE INTERNATIONAL ELECTRONICS & ENGINEERING S.A., 6468 Echternach (LU)
(72) Inventeur: SERBAN, Bogdan, L-4610 Niederkorn (LU); WITTE, Michel, L-1420 Luxembourg (LU)
(74) Mandataire: Office Freylinger
(86) Numéro de dépôt international: PCT/EP1999/008375
(87) Numéro de publication internationale: WO 2000/026626

(56) Documents cités:
- WO-A-97/18450
- WO-A-97/40339
- DE-A- 19 738 531
- DE-C- 4 237 072
- "Robotics and power semiconductors join forces to meet the challenges of the automated factory environment" ELECTRONIC DESIGN, vol. 31, no. 10, mai 1983 (1983-05), pages 97-111, XP002092415 Waseca, MN, Denville, NJ, USA

## Description

La présente invention concerne un détecteur de passager, qui sert à détecter la présence d'un passager sur un siège de véhicule et/ou sa position sur ledit siège. Un tel détecteur trouve son application notamment dans la commande d'un système de protection des véhicules automobiles, comme p.ex. les airbags.

Afin de protéger la vie des passagers lors d'un accident de la circulation, les véhicules modernes sont équipés le plus souvent d'un système de protection comprenant plusieurs airbags et des prétensionneurs de ceintures, qui servent à absorber l'énergie d'un passager libérée lors du choc de l'accident. Afin de déployer les airbags du siège du passager seulement dans le cas où ce siège est réellement occupé par une personne, on a développé des détecteurs de passager qui indiquent la présence d'un passager à la commande du système de protection.

Un tel détecteur est par exemple décrit dans le document DE-A-42 37 072. II s'agit d'un détecteur de pression à intégrer dans le siège du passager, qui comporte deux substrats isolants disposés à une certaine distance l'un au dessus de l'autre à l'aide d'un écarteur. L'écarteur comprend p.ex. une bande adhésive double face qui est découpée de manière à entourer au moins en partie les zones actives du détecteur. A l'intérieur des zones actives, une des feuilles support est munie de deux structures d'électrodes en matériau conducteur espacées l'une de l'autre, tandis que l'autre feuille support est munie d'un revêtement en matériau semi-conducteur, sensible à la pression. Le matériau semi-conducteur présente des microsaillies à la surface, de telle sorte que la résistance de surface entre la couche et un conducteur diminue quand la couche est pressée sur le conducteur.

Lorsque le siège du passager n'est pas occupé, c'est-à-dire lorsqu'aucune pression n'agit sur le détecteur de passager, la couche en matériau semi-conducteur n'est pas en contact avec les deux électrodes et la résistance électrique entre les deux électrodes est par conséquent très élevée. Si par contre une personne est assise sur le siège, les deux feuilles support sont pressées ensemble et la couche sensible à la pression se met en contact avec les deux électrodes. On réalise de cette manière un court-circuit entre les deux électrodes, dont la résistance électrique varie inversement avec la valeur de la pression appliquée. Plus la pression sur le capteur augmente plus la couche semi-conductrice est comprimée resp. plus elle entre en contact intime avec les électrodes et plus la résistance mesurée entre les deux électrodes diminue.

Le document DE 197 38 531 décrit une résistance variant avec la pression, comprenant un premier substrat et un deuxième substrat. Une couche en matière conductrice est imprimée sur le premier substrat, qui comporte des particules isolantes ayant un diamètre supérieur à l'épaisseur de la couche. Sur le deuxième support, deux électrodes sont disposées à une distance l'une de l'autre. Les deux substrats sont ensuite laminés ensemble, les particules isolantes formant des écarteurs pour empêcher un contact entre la couche conductrice et les électrodes lorsqu'aucune pression n'est exercée sur la capteur.

Un autre capteur de pression laminé est décrit dans le document WO-A-97/18450. Il s'agit d'un capteur pour mesurer la pression d'un pied, comprenant des capteurs piézo-électriques insérés dans une structure flexible en sandwich.

Un désavantage d'un tel détecteur réside dans sa rigidité élevée. En effet, dû au laminage des deux feuilles support à l'aide d'une bande adhésive, le détecteur possède une épaisseur assez importante et une grande raideur à la flexion ou à la torsion, ce qui réduit nettement sa flexibilité. Par conséquent, l'introduction d'un tel détecteur dans un siège d'un véhicule peut avoir une influence désavantageuse sur le confort du siège.

Un autre type de capteur de force est décrit dans le document "Robotics and power semiconductors join forces to meet the challenges of the automated factory environment" - Electronic design, vol.31, no. 10, mai 1983 (1983-05), pages 97-111, XP002092415, Waseca, MN, Denville, NJ, USA. Ce document décrit un capteur de force comprenant deux structures d'électrodes placées une par dessus de l'autre. Une première des structures d'électrodes est disposé sur un substrat en silicium, la deuxième est formée par un élastomère conducteur. Entre ces deux structures est disposée une couche isolante séparant les deux électrodes quand aucune force n'agit sur le capteur. II est clair que du à son support rigide, un tel capteur n'est pas du tout adapté à être intégré dans un siège de voiture.

L'objet de la présente invention est de proposer un détecteur de passager qui ne présente pas ce désavantage.

Cet objectif est atteint par un détecteur de passager comprenant un support flexible en matière isolante, au moins deux structures d'électrodes disposées sur ledit substrat isolant à une distance l'une de l'autre, et une couche en matière semi-conductrice disposée par-dessus lesdites structures d'électrodes dans une zone active du détecteur. Conformément à l'invention, ladite couche en matière semi-conductrice présente une résistance interne variant avec une déformation de ladite couche et ladite couche en matière semi-conductrice est disposée en contact intime avec lesdites structures d'électrodes.

Il est à noter que la résistance interne de la couche semi-conductrice peut aussi bien varier avec une compression de la couche qu'avec une flexion ou toute autre déformation de la couche. De plus, la résistance interne de la couche peut varier dans le même sens que la déformation (p.ex. la résistance augmente quand la pression augmente) ou dans le sens contraire de la déformation (c'est-à-dire la résistance diminue quand la pression augmente).

Le détecteur selon la présente invention ne présente donc qu'une seule feuille support, sur laquelle sont disposées aussi bien les structures d'électrodes que la couche en matière semi-conductrice. La rigidité conférée par le laminage de plusieurs couches ne s'applique plus au détecteur selon la présente invention.
De plus, le détecteur de passager présente une épaisseur moins importante que les détecteurs classiques. Par conséquent, un tel capteur se sent beaucoup moins quand il est intégré dans un siège de véhicule et il répond donc mieux aux exigences de confort dudit siège.

De plus, le détecteur selon la présente invention peut être fabriqué à des coûts inférieurs aux détecteurs classiques. En effet, le fait de n'utiliser qu'une seule feuille support réduit la consommation de feuille support de la moitié. De plus, un écarteur sous forme de bande adhésive à double face n'est plus requis.

Dans les détecteurs classiques, les feuilles support et l'écarteur enfermaient entre eux un espace, qu'il fallait relier à l'environnement à l'aide de canaux de ventilation afin de permettre un échange de pression. Or, ces canaux de ventilation rendaient les capteurs sensibles à l'humidité qui rentrait dans le détecteur ensemble avec l'air de l'environnement. Dans le détecteur selon l'invention, les canaux de ventilation ne sont plus nécessaires et le présent détecteur constitue un capteur fermé et scellé, dans lequel aucune humidité ne peut plus entrer.

Un autre avantage du détecteur de passager décrit ci-dessus constitue sa susceptibilité réduite aux tolérances de production. Dans les détecteurs classiques, la précision de positionnement des deux feuilles support l'une par rapport à l'autre constituait le point crucial de l'assemblage du détecteur. Un léger décalage des deux feuilles conduisait à un recouvrement insuffisant de la couche semi-conductrice et des électrodes et par conséquent à la production d'un détecteur non conforme aux spécifications. Dans le nouveau détecteur, toutes les couches sont déposées resp. imprimées ou collées sur la même feuille support, ce qui facilite le positionnement des différentes couches l'une par rapport à l'autre ("matching") et conduit donc à des capteurs ayant des tolérances de production très faibles. La production de capteurs non conformes aux spécifications est par conséquent nettement réduite, ce qui augmente la productivité de la ligne de production.

Afin d'augmenter davantage la flexibilité du détecteur de passager, ledit support flexible comprend de préférence une étoffe tissée ou non-tissée. Il peut s'agir d'un tissu, d'un tissu à mailles ou d'un non-tissé en fibres synthétiques isolantes. Un tel support présente une flexibilité très haute dans les trois dimensions et s'adapte par conséquent très bien à la surface tridimensionnelle du siège. De plus, une telle étoffe peut être très mince et quand même présenter une très haute résistance au stress mécanique. Une destruction du support par fatigue du matériel est dès lors exclue.

Un autre avantage d'une étoffe constitue sa perméabilité très élevée à l'air et à l'humidité. Un tel détecteur de passager ne constitue donc pas une barrière d'humidité dans le siège de véhicule et répond donc tout à fait aux exigences de confort dudit siège.

Lesdites structures d'électrodes sont p.ex. déposées ou imprimées sur le support en matière isolante. Alternativement, lesdites structures d'électrodes sont gravées ou corrodées dans une couche métallique déposée sur ledit support en matière isolante. Le dépôt ou l'impression resp. la gravure ou la corrosion des structures d'électrodes se fait avantageusement simultanément avec le dépôt, l'impression, la gravure ou la corrosion de conducteurs pour un chauffage du siège.

Dans une première exécution avantageuse, ladite couche en matière semi-conductrice comprend une encre semi-conductrice qui est imprimée sur lesdites structures d'électrodes. L'impression peut se faire p.ex. par la technique de la sérigraphie ou selon le principe du jet d'encre.

Dans une exécution alternative, ladite couche en matière semi-conductrice comprend un élastomère conductif, granulé ou non-granulé, qui est déposé ou collé sur lesdites structures d'électrodes. Une telle couche en matière semi-conductrice présente une meilleure flexibilité que les couches en encre semi-conductrice.

Il est à noter que la couche en matière semi-conductrice est divisée de préférence en plusieurs zones, disposées à différents endroits au dessus desdites structures d'électrodes et définissant ainsi plusieurs zones actives dudit détecteur.

Afin de protéger le détecteur de la corrosion, le détecteur comprend de préférence une couche protectrice appliquée sur lesdites structures d'électrodes et ladite couche resp. lesdites couches en matière semi-conductrice. Il peut s'agir par exemple d'une couche de laque en matière inerte qui est appliquée par simple immersion du capteur dans la laque.

En raison de à sa flexibilité très élevée et de son épaisseur réduite, le détecteur selon la présente invention est bien adapté pour être intégré dans un siège de véhicule. Et de par ces caractéristiques très avantageuses, le présent détecteur est compatible avec beaucoup plus de sièges que les détecteurs classiques. De plus, le présent détecteur est adapté à beaucoup plus d'applications qu'un détecteur classique.

En effet, un détecteur tel que décrit peut être intégré non seulement dans la surface de siège pour détecter la présence et/ou le poids d'un passager éventuel, mais également dans le dossier du siège et/ou dans l'appui-tête. Intégré à ces endroits, le détecteur fonctionne en tant que détecteur de position et peut détecter si le passager repose contre le dossier et l'appui-tête ou s'il se penche en avant. Dans le deuxième cas, le fonctionnement du système airbag peut être modifié en conséquence. De même, un tel détecteur peut facilement être intégré dans les bourrelets latéraux du siège afin de détecter la position latérale du passager sur ledit siège.

Outre ses applications dans le siège, le détecteur de passager tel que décrit peut être intégré dans la moquette dans l'habitacle du véhicule afin de détecter si les pieds du passager reposent sur le sol ou non. Intégré dans la ceinture de sécurité, le détecteur peut détecter la position du passager, car le système d'enroulement de ceintures de sécurité exerce d'autant plus de tension sur la ceinture que celle-ci est déroulée davantage.

## Revendications

1. Détecteur de passager comprenant un support flexible en matière isolante, au moins deux structures d'électrodes disposées sur ledit substrat isolant à une distance l'une de l'autre, et une couche en matière semi-conductrice disposée par-dessus lesdites structures d'électrodes dans une zone active du détecteur, **caractérisé en ce que** ladite couche en matière semi-conductrice présente une résistance interne variant avec une déformation de ladite couche et **en ce que** ladite couche en matière semi-conductrice est disposée en contact intime avec lesdites structures d'électrodes.

2. Détecteur selon la revendication 1, **caractérisé en ce que** ledit support flexible comprend une étoffe tissée ou non-tissée.

3. Détecteur selon l'une des revendications 1 ou 2, **caractérisé en ce que** lesdites structures d'électrodes sont déposées ou imprimées sur le support en matière isolante.

4. Détecteur selon l'une des revendications 1 ou 2, **caractérisé en ce que** lesdites structures d'électrodes sont gravées ou corrodées dans une couche métallique déposée sur ledit support en matière isolante.

5. Détecteur selon l'une des revendications 1 à 4, **caractérisé en ce que** ladite couche en matière semi-conductrice comprend une encre semi-conductrice qui est imprimée sur lesdites structures d'électrodes.

6. Détecteur selon l'une des revendications 1 à 4, **caractérisé en ce que** ladite couche en matière semi-conductrice comprend un élastomère conductif, granulé ou non-granulé, qui est déposé ou collé sur lesdites structures d'électrodes.

7. Détecteur selon l'une des revendications 1 à 6, **caractérisé en ce que** la couche en matière semi-conductrice est divisée en plusieurs zones disposées à différents endroits au dessus desdites structures d'électrodes et définissant ainsi plusieurs zones actives dudit détecteur.

8. Détecteur selon l'une des revendications 1 à 7, **caractérisé par** une couche protectrice appliquée sur lesdites structures d'électrodes et ladite couche resp. lesdites couches en matière semi-conductrice.

9. Siège de véhicule comprenant un ou plusieurs détecteurs de passager selon l'une des revendications 1 à 8.

10. Siège de véhicule selon la revendication 9, **caractérisé en ce qu'**un détecteur de passager selon l'une des revendications 1 à 8 est intégré dans la surface de siège et/ou dans le dossier et/ou dans l'appui-tête.

## Claims

1. Passenger detector comprising a flexible support made of an insulating material, at least two electrode structures placed on said insulating substrate at a distance from each other, and a layer of semiconducting material placed on top of said electrode structures in an active zone of the detector, **characterised in that** said layer of semiconducting material has an internal resistance that varies with a deformation of said layer and **in that** said layer of semiconducting material is placed in intimate contact with said electrode structures

2. Detector according to Claim 1, **characterised in that** said flexible support comprises a woven or non-woven fabric

3. Detector according to one of Claims 1 or 2, **characterised in that** said electrode structures are deposited or printed on the support of insulating material

4. Detector according to one of Claims 1 or 2, **characterised in that** said electrode structures are engraved or etched in a metallic layer deposited on said support of insulating material

5. Detector according to one of Claims 1 to 4, **characterised in that** said layer of semiconducting material comprises a semiconducting ink which is printed on said electrode structures

6. Detector according to one of Claims 1 to 4, **characterised in that** said layer of semiconducting material comprises a conducting elastomer, granulated or non-granulated, which is deposited or stuck on said electrode structures

7. Detector according to one of Claims 1 to 6, **characterised in that** the layer of semiconducting material is divided into several zones positioned at different places above said electrode structures, thus defining several active zones of said detector

8. Detector according to one of Claims 1 to 7, **characterised by** a protective layer applied on to said electrode structures and said layer or layers of semiconducting material

9. Vehicle seat comprising one or more passenger detectors according to one of Claims 1 to 8

10. Vehicle seat according to Claim 9, **characterised in that** a passenger detector according to one of Claims 1 to 8 is integrated into the surface of the seat and/or into the back and/or into the head-rest

## Patentansprüche

1. Fahrgastdetektor, umfassend einen flexiblen Träger aus Isoliermaterial, mindestens zwei auf dem Isoliersubstrat in einem Abstand voneinander angeordnete Elektrodenstrukturen und eine über den Elektrodenstrukturen in einem aktiven Bereich des Detektors angeordnete Schicht aus halbleitendem Material, **dadurch gekennzeichnet, dass** die Schicht aus halbleitendem Material einen mit einer Verformung der Schicht variierenden Innenwiderstand aufweist und dass die Schicht aus halbleitendem Material in engem Kontakt mit den Elektrodenstrukturen angeordnet ist

2. Detektor nach Anspruch 1, **dadurch gekennzeichnet, dass** der flexible Träger einen Gewebe- oder Vliesstoff umfasst

3. Detektor nach einem der Ansprüche 1 oder 2, **dadurch gekennzeichnet, dass** die Elektrodenstrukturen auf dem Träger aus Isoliermaterial abgeschieden oder aufgedruckt sind

4. Detektor nach einem der Ansprüche 1 oder 2, **dadurch gekennzeichnet, dass** die Elektrodenstrukturen in einer auf dem Träger aus Isoliermaterial abgeschiedenen Metallschicht eingraviert oder eingeätzt sind

5. Detektor nach einem der Ansprüche 1 bis 4, **dadurch gekennzeichnet, dass** die Schicht aus halbleitendem Material eine halbleitende Druckfarbe umfasst, die auf den Elektrodenstrukturen aufgedruckt ist

6. Detektor nach einem der Ansprüche 1 bis 4, **dadurch gekennzeichnet, dass** die Schicht aus halbleitendem Material ein granuliertes oder nicht granuliertes, leitendes Elastomer umfasst, das auf den Elektrodenstrukturen abgeschieden oder aufgeklebt ist

7. Detektor nach einem der Ansprüche 1 bis 6, **dadurch gekennzeichnet, dass** die Schicht aus halbleitendem Material in mehrere Bereiche geteilt ist, die an verschiedenen Stellen über den Elektrodenstrukturen angeordnet sind und so mehrere aktive Bereiche des Detektors definieren.

8. Detektor nach einem der Ansprüche 1 bis 7, **gekennzeichnet durch** eine auf den Elektrodenstrukturen und der bzw den Schichten aus halbleitendem Material aufgebrachte Schutzschicht

9. Fahrzeugsitz, umfassend einen oder mehrere Fahrgastdetektoren nach einem der Ansprüche 1 bis 8.

10. Fahrzeugsitz nach Anspruch 9, **dadurch gekennzeichnet, dass** ein Fahrgastdetektor nach einem der Ansprüche 1 bis 8 in die Sitzfläche und/oder in die Sitzlehne und/oder in die Kopfstütze integriert ist
